Europäisches Patentamt

European Patent Office

Office européen des brevets

(19)

(11) **EP 0 742 431 B1**

## (12) EUROPEAN PATENT SPECIFICATION

(45) Date of publication and mention
of the grant of the patent:
**15.03.2000 Bulletin 2000/11**

(51) Int Cl.7: **G01N 21/89**

(21) Application number: **95440027.1**

(22) Date of filing: **10.05.1995**

(54) **Method and apparatus for detecting flaws in moving fabrics or the like**

Verfahren und Vorrichtung zum Erfassen von Fehlern in Textilbahnen und dergleichen

Procédé et dispositif de détection de défauts dans des bandes de tissu ou analogue

(84) Designated Contracting States:
**AT BE CH DE DK ES FR GB GR IE IT LI LU MC NL
PT SE**

(43) Date of publication of application:
**13.11.1996 Bulletin 1996/46**

(73) Proprietors:
• **Mahlo GmbH & Co. KG
93342 Saal (DE)**
• **LEGLER S.p.A.
24040 Frazione Crespi d'Adda (Bergamo) (IT)**
• **LEGLER INDUSTRIA TESSILE S.p.A.
24036 Ponte San Pietro (Bergamo) (IT)**

(72) Inventors:
• **Vercruysse, Michel
Résidence Marly,C504,F-69100 Roubaix (FR)**
• **Gontero, Enzo
I-10137 Torino (IT)**
• **Nari, Dario
I-12032 Barge (IT)**

• **Mandelli, Eugenio
I-24129 Bergamo (IT)**

(74) Representative:
**Bohnenberger, Johannes, Dr. et al
Meissner, Bolte & Partner
Postfach 86 06 24
81633 München (DE)**

(56) References cited:
**EP-A- 0 493 291       EP-A- 0 543 629
EP-A- 0 572 336       GB-A- 2 224 831
US-A- 4 675 730       US-A- 4 752 897
US-A- 5 068 799       US-A- 5 118 195
US-A- 5 301 129       US-A- 5 305 392**

• **PROCEEDINGS 6th MEDITERANNEAN
ELECTRO- TECHNICAL CONFERENCE, 22-24
May 1991, LJUBLJANA, SLOVENIA, VOLUME 2,
pages 1255-1258**

**Description**

The present invention relates to inspection systems and methods for moving material, especially for detecting flaws in a moving continuous material and concerns a method and an apparatus for detecting flaws on moving fabric or the like.

For instance, in the textile industry the quality of a fabric has to be verified especially before the making-up into final garments.

This task is generally performed by human operators and, as it is a tedious and stressing job, the inherent fatigue leads to a non-consistent quality control which may create all kinds of problems, at least troubles between manufacturers and customers.

On another hand, a high quality control means also high personal costs. Thus the automatisation of fabric inspection is relevant. However, due to the difficulties of realization, it is not surprising that only few equipments exist, although not constituting satisfactory solutions.

Weak performances have been stated especially when match filters are necessary.

It is well known that match filters provide the optimum signal to noise ration for detecting signals. Unfortunately, this approach cannot be always applied.

Indeed, if the flaw has a random shape or it is piecewise discontinuous, the design of the match filter is obviously problematic, so that, when using this technique, flaw detection becomes a difficult problem of region growing which may be either computing demanding or simply insurmountable.

Moreover, a match filter is by nature directional and very sensitive to deviations of curvature. For instance, in the textile industry, considering a woven fabric, the weft may have distortions like the so-called bow distortion, so that flaws which are oriented in the weft direction cannot be perfectly matched.

In the warp yarn direction, the same problem appears for very thin flaws if lateral displacement is occasioned.

In another way, a flaw surface may only be characterised by a texture modification of the fabric and not by its brightness average.

The existing systems do not consider this aspect especially due to the computing demanding for texture detection. Furthermore the proposed systems are not really modular, what may be problematic if several sensors are needed or simply if there is a high number of flaw types.

Remarks have also to be done concerning the existing light sources. It has been widely verified that if image forming and recording tools are used, the illumination of the fabric may be problematic in terms of light power and manner of illumination, this problem having not been solved to satisfaction by prior art arrangements.

Finally, if the fabric quality parameter is established on human criteria, a high correlation beween detection systems and human operators may exist if such systems introduce equivalences, which is not the case actually.

Therefore, the main object of the present invention is to propose a method for detecting flaws especially in moving fabrics or the like, which is very sensitive, highly reliable, fast and adaptable, and also a corresponding apparatus based on a modular construction.

According to GB 2 224 831 A, a system for processing line scan video image signal information comprises a plurality of image processors. The system is especially suitable for processing optical image information from photo detector arays arranged in a single line (line scan CCD arays). The system is typically applicable to the sorting and/or rejection of incorrectly sized or shaped or colored pharmazeutical capsules or tablets, glass fiber reinforced palletts, and food stuffs. Video image signal information is derived from a video signal obtained by at least one line scan operation, especially for the detection of faults or inconsistencies in a travelling sheet of material or in objects or particular material travelling in a stream, wherein the image signal information is allocated into packets and the individual packets of image information are processed concurrently in different image processors. a train of video image signal information from a line scan camera. A plurality of image processors all receive said image signal information but each is arranged to recognize and process only a respective packet of that information, whereby different packets of the image signal information are processed concurrently.

The present invention thus concerns a method for detecting flaws according to claim 1.

According to a first aspect of the invention, the modelling step of the digitized image, leading to an image compression, may consist in sampling the digitized image by ways of an adapted sampling window, possibly with a certain overlapping rate, and performing a modelling of the grey levels of the image pixels contained within each of said windows by ways of a statistical parametric model, the modelling parameter being advantageously the sum and/ or the sum of the squares of the grey levels or luminances of the pixels within the considered sampling window, thereby defining a directional average and/or quadratic sum respectively, the direction being given by the orientation of the biggest common directional local edge.

The different detection channels are preferably clustered into groups, corresponding each to flaw types or categories which have the biggest common directional local edge which may be inscribed in the corresponding flaw types representative textures, the said biggest common directional local edge defining the two dimensions of the sampling window used by the corresponding group of detection channels and the orientation of said sampling window being possibly adjustable according to the weft distortion parameters.

If the orientation of the sampling window cannot be changed or adjusted, then the modelling and/or reconstructing step(s) is (are) performed by taking into account the weft distortion.

The parameters of the weft distortion can be determined, for example, by using the method and apparatus for determining the distortion angles or moving fabrics described in the european patent application EP-A-0 741 290 filed by the same applicants as herein.

In accordance with a preferred embodiment of the invention, each detection channel may be composed of a local edge detector, which locates and weights the edge elements contained in the modelled and compressed digitized image and so provides a channel specific image of weighted edge elements, a flaw constructor, which sums and averages separately the components of the edge elements contained in a pre-defined window, and thresholding functions and/or tests of hypothesis means, which evaluate the parameters consisting of the averages of the pixels grey levels compared with a threshold (fixed or mobile), the difference of averages (calculated on adjacent non overlapped windows) compared with a threshold and the variance of pixels grey levels compared with a threshold, and computed by the flaw constructor for each said pre-defined window.

These different parameters constitute therefore the different weight components of the edge elements.

The dimensions of the said pre-defined window are advantageously greater than or equal to the dimensions of the flaw type being searched or at least sufficient to be able to differentiate a flawed from a non-flawed zone, with a minimal level of certainty, by the considered detection channel, the shape and the orientation of said pre-defined window being also adapted to the concerned searched flaw type and to the corresponding noticed flaw orientation or weft distortion, so as to be oriented in palallel to the weft distortion.

According to a further aspect of the invention, the correction of the digitized image may consist of a filtering operation by using for example a look-up-table in order to perform a histogram modification of the grey levels of the pixels of the said image and of an enhancing operation, by using for example a convolution mask.

The present invention also concerns an apparatus for detecting flaws on moving fabrics or the like, as defined in claim 9.

In accordance with a feature of the invention, each image forming and recording means is comprised of a photographic lens and a line scan camera, associated with an analog/digital converter and a corresponding transmitter module, when said image forming and recording means are distant from said vision computer.

If the case occurs, several image recording means are provided, having adjacent or at least partly overlapping view fields, in order to cover the whole width of the fabric or the like.

According to an aspect of the invention, each acquisition module comprises a receiver circuit, a look-up-table to correct the image of the fabric or the like, possibly biased by irregular illumination or light response differences at the image forming and recording means and a frame memory to store the successive images before their modelling and flaw detection processing.

Advantageously, each pre-processing and modelling unit consists of a cabled processor, a digital signal or any massively parallel device which processes the image coming from the associated acquisition module in order to filter and eliminate the noisy information, possibly by using a look-up-table, and/or to enhance the image, possibly by using a convolution mask, samples the said image by means of, possibly overlapping, sampling windows, adapted to the type of flaw to be detected, and computes the average sum and/or the quadratic sum of the grey levels of the pixels within each of the said sampling windows in order to obtain a statistical parametric model of the image.

In accordance with a preferred embodiment of the invention, the detection units consist each of parallel arranged fast digital signal processors and their associated data and program memories, forming as many different detection channels as there are different types or categories of flaws to be searched, each of said signal processors performing i) a transformation of the modellised image issued by the corresponding pre-processing and modelling unit into an image composed of weighted edge elements marking the local texture of possible flaws, ii) a linkage of said edge elements within a validation window adapted to the flaw type to be detected by the said detection channel, by summing and averaging separately the weights of said edge elements and iii) an indication of presence of flaw by using the distribution parameter of the obtained averages and by means of thresholding functions and/or tests of hypothesis.

In order to provide the best possible illumination of the moving fabric or the like for the image forming and recording means, the direction of the light emitted by the lighting means arrangement is oblique, with a weak angle, or almost horizontal with reference to the fabric or the like, the image forming and recording means being positioned along an almost vertical axis with reference to the fabric or the like.

Preferably, the lighting means arrangements may be formed by several light projectors disposed in two rows across the total fabric width, the projectors on each row having same distances between each other, one row displaced by half distance against the other row, the projectors of each row radiating towards the center of the stripe to be detected and so illuminating quasi-uniformly the whole fabric width, at least along a ribbon like transverse strip, by the combination of the oriented directional light beams issued by each of the said light projectors, hereby creating a high intensity light band across the fabric or the like.

In order to insure a constant resolution whatever the running speed of the fabric is and to be able to visualise the image of the fabric and the detected flaws, an encoder measuring the displacement of the moving fabric or the like and a visualisation module linked to a monitor are also provided.

When working with complex multilayered and/or thick fabrics or cloths, the apparatus can be comprised of several sets of lighting means arrangement/image forming and recording means, whereas a lighting means arrangement and a corresponding image forming and recording means are mounted on and directed towards each face or side of the moving fabric or the like.

In view of a better understanding of the present invention, the general combined working of the novel method and apparatus claimed herein will be described hereinafter, by following chronologically the treatment and processing steps of visual informations taken from a moving continuous fabric or the like.

First an optical system forms the real image of the fabric which may be illuminated by standard light sources or by an arrangement of light projectors, the said arrangement being part of the present invention.

The said real image is sampled by a line light sensitive sensor, preferably one camera (or more) the output signal of which is digitized by an analog-digital converter and transmitted to a vision computer.

In order to correct pixels light response differences and/or irregular fabric illumination, the digitized image is firstly corrected and then stored in a frame memory.

According to the present invention, the said vision computer is based on a parallel hardware architecture implementing multiple channels of detection simultaneously working. Each detection channel is dedicated to detect one type of flaw.

The main working hypothesis of the invention is based on the fact that flaws are known, which corresponds to the reality as catalogues of flaws to be detected on inspection machines exist.

Therefore each flaw to be detected on fabrics or the like can be considered as a known bi-dimensional signal.

The flaw being considered to be composed of edge elements representative of their texture, the said detection channels are clustered into groups, containing each flaw types which have the biggest common directional local edge which may be inscribed in the flaw types representative textures. Each said biggest directional local edges defines the two dimensions of a window which samples (an overlapping may be used) the said stored image.

More precisely, if ten flaw type groups are stated, ten sampling windows will be defined, the dimensions of which are determined by considering the biggest common directionnal local edge.

According to the present invention, the grey levels of the pixels within the given sampling window(s) are modelized by a statistical parametric model. The model parameters are the sum and/or the sum of the squares of the grey levels or luminances of the pixels within the sampling window defining thus a directional average and/or quadratic sum respectively, the direction being given by the orientation of the said biggest common directional local edge.

It has to be noted that a data compression is performed at this processing step by modelling the image, this compression being one of the main features of the method and apparatus according to the invention from the real time processing point of view.

According to the present invention, before computing the model parameters of each sampling window, the image coming from the frame memory may be firstly filtered and/or enhanced in order to eliminate the noisy information, considered as such for the corresponding group of channels.

In a preferred embodiment, the filtering (and/or enhancement) and the modelling (compression) is performed, for each group, by a dedicated cabled processor which sends afterwards the compressed image to each detection channel of the corresponding group.

As explained before, one or several programmable digital signal processors implement each said group of channels, each channel being composed of a local edge detector and a flaw constructor.

The biggest edge elements height inscribed in the flaw type texture being determined, the corresponding edge detector locates and weights the edge elements contained in the compressed image, the edge elements dimensions being given by the said biggest edge element height.

Thus, each channel produces its own image of edge elements, each element being characterized by its weight. The said weight may have one or several components: the directional differentiation value of non-overlapping edge elements grey levels averages and/or the variances of grey levels of the pixels contained in the edge element. The directional differentiation may be performed in the horizontal or vertical direction.

At this processing step, each flaw is considered to have a local texture marked by weighted edges elements.

The differentiation operation is performed on the basis of an equivalent of the eye contrast sensitivity which is defined mathematically by the intensity variation and intensity ratio (Weber fraction). Moreover, this differentiation puts in evidence local texture while eliminating the low background intensity variations which may disturb light flaws detection, as it happens when the systems are used.

After each edge detector follows a flaw constructor, this for each detection channel.

This flaw constructor sums and averages separately the weights components of all the edges elements contained in a pre-defined window, adjustable as to dimension, position and orientation, called validation window. The dimensions of this window are greater (at least equal) than the dimensions of the flaw type being searched by the corresponding detection channel. Thus the said validation window may be characterized by the differential values average and/or the variances average of the edge element weights. Hereto, the sum function of the flaw constructor is an equivalence to integration of local intensity variations performed by human operator.

Using the distribution parameters (average and/or standard deviation) of the said differential values averages and/or the distribution of the said variances averages, a flaw may be detected using for instance thresholding functions. Nevertheless, tests of hypothesis may be also used.

According to the present invention, all the detection channels constitute a detection module which is dedicated to one camera. Several said modules may be installed if several cameras are necessary, for instance to cover the fabric or the like total width.

Thus, on one hand, due to the parallel architecture, the system is fast. On the other hand, using the channels concept with fast programmable digital processors, the system is flexible and easy to adapt to user requirements.

The present invention will be even better understood thanks to the following description, based on preferred embodiments showed and explained, as non limitative examples, by referring to the following accompanying schematic drawings, wherein:

figure 1 is a block diagram of the apparatus of the invention;
figure 2 shows a block diagram of one given processing unit being part of the apparatus of the invention;
figure 3 shows an embodiment of all the processing steps which may be implemented in a detection channel being part of the apparatus of the invention;
figure 4 shows a flaw diagram of the image transformations implemented in each said detection channel;
figure 5 shows the lighting principle used within the present invention, and,
figure 6 illustrates an arrangement of light projectors according to an embodiment of the present invention.

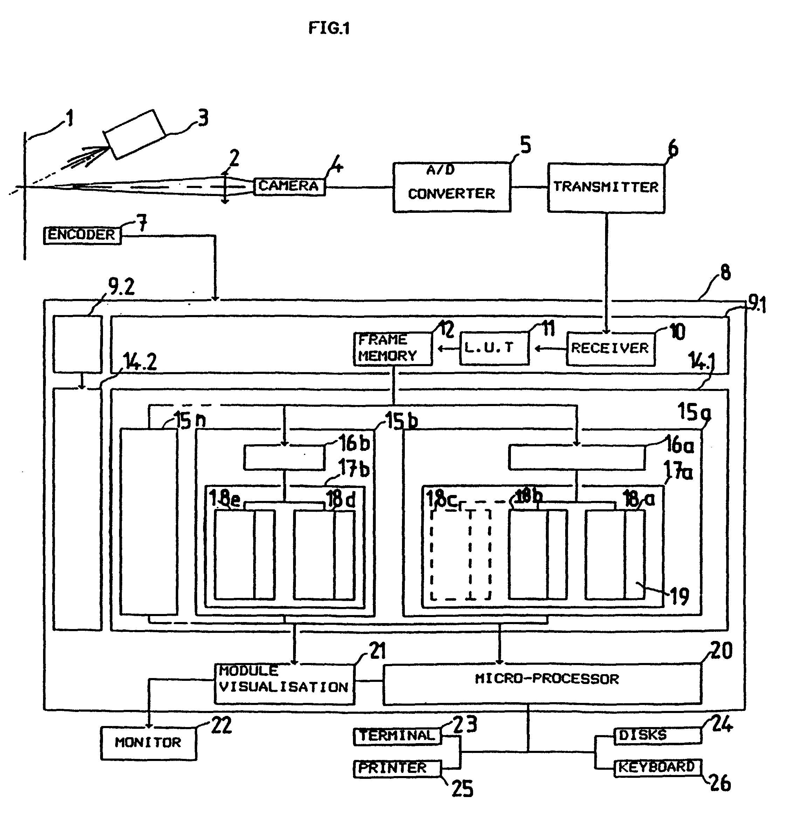

Referring to figure 1, one can see that thanks to the apparatus according to the invention an image of a fabric 1, illuminated by a light source 3 or lighting means arrangement is first formed by a standard photographic objective 2.

The image is then sampled in accordance with the encoder signals by a line scan camera 4 which output is digitized by an analog-digital converter 5 and sent by transmitter 6 to the vision computer 8 which incorporates at least one acquisition module 9.1 .

The acquisition module 9.1 comprises first the receiver 10. To correct irregular illumination of the fabric 1 as well as the light response differences between pixels, a look-up-table 11 is used before storing the image in the frame memory 12.

A processing module 14.1 contains all the hardware components which will be described herein, for processing the signal of the corresponding camera 4 in order to detect all types of flaws which may be present in the fabric 1.

Like the number of acquisition modules 9.1, 9.2 the number of processing modules 14.1, 14.2 is equal to the number of cameras. A second processing module 9.2, 14.2 being shown on figure 1, corresponds with a second camera.

For each said group of detection channels symbolized by 15a, 15b to 15n (n being the total number of groups) a cabled processor 16a, 16b is dedicated which firstly pre-processes the image coming from frame memory 12 in order to eliminate the noisy information (considered as such) for the group of channels associated with it and/or to enhance the image. Secondly, each cabled processor 16a, 16b computes the said average and the said quadratic sum of the grey levels of the pixels within a corresponding sampling window.

Once the said cabled processor 16a or 16b has processed the whole image, the parameters of each corresponding sampling window are sent to the corresponding following processor unit 17a or 17b .

Figure 1 shows for example two processor units as indicated by 17a and 17b which are connected to the cabled processor 16a and 16b respectively. According to the present invention, each processor unit 17a, 17b is composed of fast programmable digital signal processors (at least one) as indicated by 18a to 18c for processor unit 17a and by 18d and 18e for processor unit 17b. Each digital signal processor has its own data and program memory as indicated (for example) by 19.

A central micro-processor 20 controls all the system functions and is connected to usual standard peripherals for example to a terminal 23, a storage disk device 24, a printer 25 and a keyboard 26. By using a visualization module 21, the image of the fabric 1, as well as recognized flaws may be viewed on monitor 22. In order to maintain a constant resolution in the moving direction, an encoder 7 may also be used.

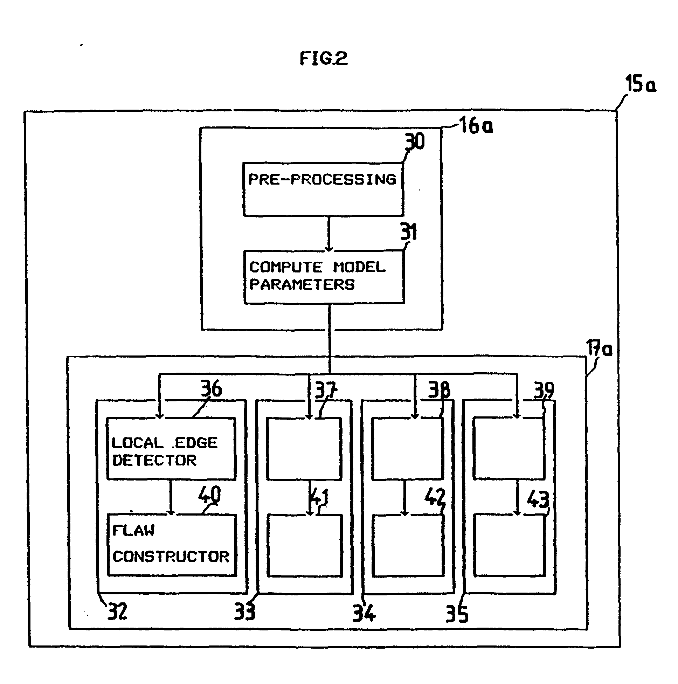

A given channels group software architecture with its hardware realization level is shown on figure 2.

The cabled processors 16a, 16b implement two main tasks. The first task is to filter and/or to enhance the image. This task is called the pre-processing step as indicated by box 30. Examples of pre-processing functions will be given hereunder in the description of one given detection channel. The second task is to compress the filtered image by modelling it using the corresponding sampling window (box 31). The compressed (modelled) image is afterwards sent to each detection channel belonging to the group defined by the corresponding cabled processor 16a, 16b.

Figure 2 shows (in example) four detection channels as indicated by 32, 33, 34 and 35. Each channel being dedicated to the detection of a flaw type, implements the said local edge detector and the said flaw constructor as indicated by 36, 37, 38 and 39 for edge detection and 40, 41, 42, 43 for flaw construction.

The modelling of the fabric image can be performed by using, for example, statistical models or auto regressive models, a gaussian being however preferred after several experiences and tests.

The invention was carried out practically, as far as modelling and detection are concerned, on the basis of the following mathematical representation of flaw of type J:

$$V^j_{x_n,y_n} = \int\int_0^{[L*H]^{a_j}_{x_n,y_n}} \Delta I(x,y)\,dx\cdot dy \qquad (1)$$

with

L,H        respectively length and height of flaw of type j
$\alpha j$        orientation of flaw j
xn,yn      the co-ordinates of flaw j
$\Delta I(x,y)$    variation function of I,
           I being intensity (grey level)

It has to be noticed that $\Delta I/I$ is the mathematical definition of the contrast sensitivity of the eye (Weber fraction) and so if I is maintained constant, the $\Delta I$ introduced in the definition of the signal gives eye analogy, using CCD camera.

So this function represents exactly what the human operator performs to detect the flaws, variation of I is summed, especially for light flaws. Thus, the function gives human brain analogy. It can be said that effectively, a high correlation exists between system detection and human operator. The very good results obtained are indirectly the demonstration of this correlation.

The integration of $\Delta I(x,y)$ on a window which is adapted to the type of flaw, i.e. its shape, dimensions and orientation, means that an adapted filter is used. In fact, the volume function works like a correlator.

The volume defined by the equation (1) represents the mathematical weight of the flaw. It can be directly used for commercial evaluation of the textile, i.e. to give points of demerit. Thus, the apparatus will be easy adapted to commercial specifications given by the textile companies.

The aforesaid integral function was programmed by ways of the following numerical approximation:

$$V^j_{x_n,y_n} = \sum^{[L*H]^{\alpha_j}_{x_n,y_n}} \Delta I(l,h) \qquad (2)$$

where $\Delta I[l,h]$ is defined by a gaussian model (general case) computed on the difference of grey levels between two adjacent sampling windows of dimensions l,h.

It has to be noted that if $\alpha$ is obvious for many flaws, it has to be generally estimated for the flaws in the weft. Flaws like missing weft, double pick, loom stop, thick place or harness balk are some examples. A special, comparatively simple and inexpensive design of standard equipment can be used for this purpose, as known by skilled persons.

The numerical approximation (equation 2) defines in fact the used channel of detection for each flaw (or group of flaws), composed mainly of two steps, a pre-processing step (image enhancement, reduction of information, modelling of flaw) followed by a validation step (recognition step computed on the parameters distributions).

As for the detection or pattern recognition of the flaws, a recognition space had to be found. Therefore, three different methods are available, i.e. heuristic methods (based on ad hoc procedures), mathematical methods (deterministic and statistical) or linguistic or syntactic methods (based on the definition of primitive elements).

In practically carrying out the invention, and due to the Gaussian model used, the mathematical method was chosen, based on the probability density function for the average parameter and tests of hypothesis for variance.

The different detection equations used for this purpose are described more precisely hereinafter.

Depending on the aspects of each flaw, we consider two flaws, the deterministic case where $V^j_{x_n,y_n}$ (see formula hereunder) is defined by one parameter, and the random case where it is defined by a Gaussian model.

As seen before:

$$V^j_{x_n,y_n} = \sum^{[L*H]^{\alpha_j}_{x_n,y_n}} \Delta I(l,h) \qquad (2)$$

Considering the deterministic aspect and if $\overline{V}_j$ is the average of $V^j_{x_n,y_n}$ and $\sigma_{v_j}$ its standard deviation, the rule of detection can be formulated as follows:

if

$$V^j_{x_n,y_n} \overset{>}{\underset{<}{\ast}} \overline{V}_j + k^j_a \ast \sigma_{v_j} \qquad (3)$$

then

$V^j_{x,y}$ is a flaw of type $j$ at co-ordinates $x_n, y_n$

$K^j_a$ being thresholding coefficient

Therefore, for example, using > sign $K^j$ positive, flaw of type j at co-ordinates $x_n, y_n$ is detected (lighter zone)

Considering now the random aspect, and if

$V^j_{x_n,y_n}$ is written $V^j_I$

$\overline{Var}_{v_j}$ is the average of

$$Var_{v^j_I} \, ,$$

variance of $V^j_I$ the rules of detection can be formulated:

if

$$V^j_{x_n,y_n} \overset{>}{\underset{<}{\ast}} \overline{V}_j + k^j_a \ast \sigma_{v_j} \qquad (3)$$

and

$$Var_{v^j_I} > k^j_v \ast \overline{Var}_{v_j} \qquad (if \ Var_{v^j_I} > \overline{Var}_{v_j})$$

or

$$\overline{Var}_{v_j} > k_v^j * Var_{v_I^j} \qquad (if\ \overline{Var}_{v_j} > Var_{v_I^j})$$

$K_a^j$, $K_v^j$ be thresholding coefficients then there is a flaw of type $j$ at co-ordinates $x_n$, $y_n$

For example, if > sign is used for average and equation 3 is verified, flaw of type j is detected (i.e. lighter zone and bigger variance).

It has to be notices that all the distributions converge to theoretical distributions, i.e. gaussian for average and F distribution for variance ratio. It means that error probability can be estimated depending on thresholding coefficients. This is a very important aspect to estimate the robustness of the method and apparatus of the invention.

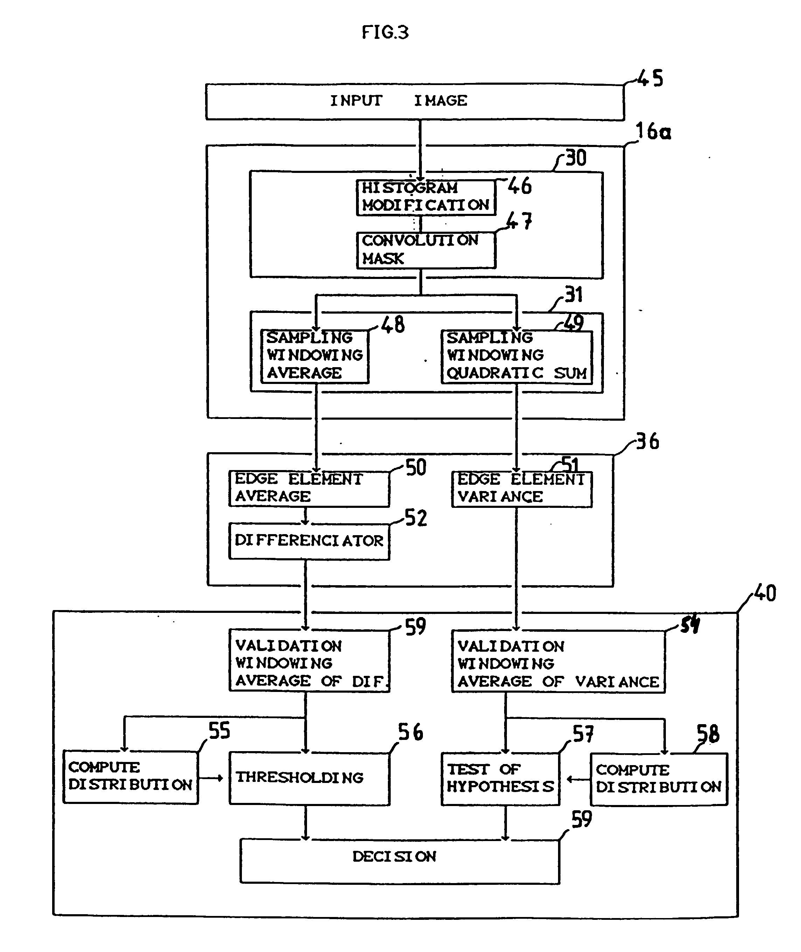

Turning now to figure 3, together with figure1, of the accompanying drawings, there is shown the cabled processor 16a which implements the pre-processing functions (box 30) that is a histogram modification 46 of the grey levels in order to eliminate considered noisy information for this specific group of detection channels.

For instance, if the group of channels is dedicated to detect dark flaw types on a dark background surface, it may be useful to eliminate white points which may bias the parametric model of the grey levels within the corresponding sampling window.

According to the present invention, the cabled processor may contain a look-up-table 11 to implement this filtering function.

After noise elimination, a convolution mask (box 47) may be used in order to enhance the image. It may be a line or dot convolution or the like, especially if the flaws are composed of line parts or dots.

Then, the computation of the model parameters, average sum 48 and quadratic sum 49 of the grey levels within the said sampling window are calculated.

The local edge detector (box 36) computes the grey levels edge element average (box 50) and the grey levels edge elements variance (box 51). Afterwards, the said directional differentiation (box 52) is performed on the edge elements average. It may be the average differences between non-overlapping vertical or horizontal edge elements. We obtain thus at the output of the local edge detector 36 an image composed of weighted edge elements.

The flaw constructor (box 40)links afterwards the edge elements using the said validation window and the average of the differential values and the average of the variances of the edges elements within the said validation window are performed (box 53) and (box 54).

The distribution of each resulting image is computed (box 55) and (box 58). Using the distribution parameters and thresholding coefficients, the decision (box 59) - is a flaw present or not ? - may be thus taken using the thresholding function (box 56) and the test of hypothesis (box 57).

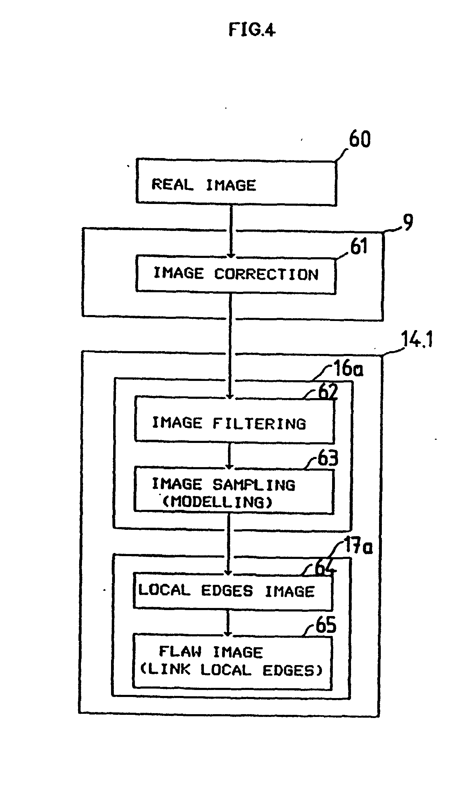

Referring to figure 4, there is shown a flow chart recapitulating the image 60 transformations implemented for each said detection channel.

The first transformation is a correction of grey levels performed on each pixel (box 61). This said correction is performed for example at the acquisition module 9 level by look-up-table 11.

The second transformation is an image filtering (box 62) performed for example by the cabled processor (16a for example) at the processing module level 14.1.

The third transformation is the modelling of the corrected and filtered image (box 63). This said modelling is performed for example by the cabled processor (16a for example) using the corresponding sampling window.

The fourth transformation concerns the image edges (box 64) using the local edge detector (36 for example).

The fifth and last transformation delivers the flaw image (box 65) by linking the said edges elements using the predefined or so-called validation window the shape and the orientation of which are respectively adapted to the shape of the concerned searched flaw type and to the noticed flaw orientation or weft distorsion, so as to be oriented in parallel to the weft distortion. These two last transformations are performed by the processor unit (17a for example) at the processing module level 14.1, the said processor unit 17a being composed of fast digital signal processors (18a to 18c for example) or massively parallel devices.

The present invention also deals with light means which may be used to illuminate the fabric. The detection of flaws which have more or less the same color as the fabric, is obviously difficult. However, if this type of flaw has a background texture modification, a better contrast is obtained if oblique or almost horizontal light is used, putting in evidence the flaw relief.

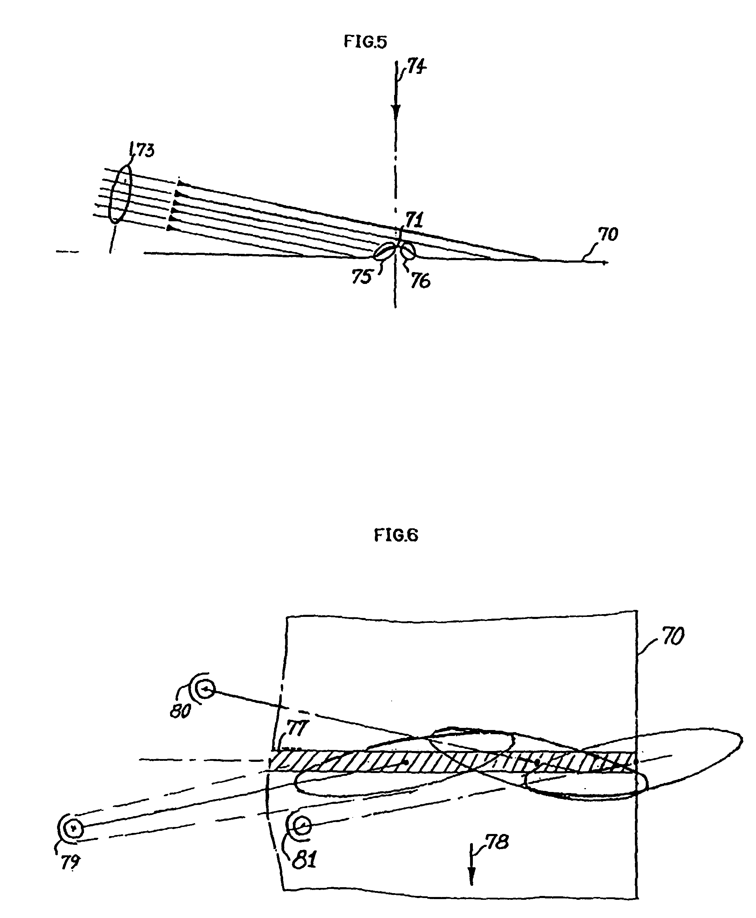

Thus figure 5 shows a fabric 70 having a flaw 71 which has a relief. Using the light beam 73 and observing the flaw in the vertical axis 74, a lighting difference may be stated between flaw part 75 and flaw part 76.

Figure 6 shows a light band 77 across the fabric 70 moving in the direction indicated by arrow 78. In order to obtain a high lighted fabric 70 with the same intensity for the whole fabric width, the present invention may provide an illuminator which comprises several light projectors which are mounted as described before and as indicated by 79, 80 and 81, each projector delivering a directional light beam like 73. On figure 5 the whole fabric width may thus be uniformly covered using the sufficient number of light projectors for which halogen lamps with dichroic mirrors may be used for example.

The said arrangement may be used to improve the visibility of flaws which have a local texture oriented more particularly in the moving direction. Standard light sources like fluorescent tubes or halogen lamps or arc lamps may be also used either in reflection mode (camera and light sources are put on the same fabric side) or transmission mode (camera and light source are put on opposite fabric sides).

The advantages of of the invention can be summarized as follows:

- Most of the flaws (more than 95 %) are detected, even light flaws, with an error probability of about zero (thresholding coefficient at least 4 sigma).
- The term DI involves a differentiation function eliminating background intensity.
- Using a programmable kernel for the detection (digital signal processing), applications on different types of textiles (like grey goods) can be easily implemented.
- Due to the parallel structure and working, speed inspection can be specified i.e. increased with additional processors without changing the global hardware architecture.
- The detector according to the present invention being optimal from a ratio signal/noise point of view and the signal of each flaw being sampled according to double the maximum of the spatial frequencies (maximum reduction of information quantity which limits the hardware ensemble correlatively), the ratio performance of the detector/price of the items composing the said detector is from a theoretical point of view maximum for this detector.

The practical realisation of the apparatus including physical and electronical construction and software programing may be easily accomplished by persons skilled in the art on the basis of the present specification, and does not need thus any further explanation.

The present invention is, of course, not limited to the preferred embodiments described herein and represented on the accompanying drawings, changes can be made or equivalents used without departing from the invention as claimed.

## Claims

1. Method for detecting flaws on moving fabrics, cloths, sheet materials or the like, comprising the steps of forming an image of the fabric or the like and recording the said image by at least one image recording means (4), digitizing the resulting video signal, transmitting the digitized image, after correction and specific modelling, to a processing module;

   **characterized in that**

   - the signal from each image recording means is transmitted to a corresponding processing module; each of said modules comprising several distinct detection channels (32-35) working contemporaneously, each of them being dedicated to one type or category of flaws to be detected;

   - splitting, for each channel, the said modellised image into vectorial edge elements (36-39) representative of the local concerned flaw texture;

   - reconstructing, for each channel, the flaw type being searched (40-43), on the basis of the said edge elements and using adapted windows, evaluating the weight components, $V_j$, of all the edge elements contained in each said windows and

   - indicating the presence, the type and/or the position of the flaws possibly detected.

2. Method according to claim 1, wherein the modelling step of the digitized image, leading to an image compression, consists in sampling the digitized image by ways of an adapted sampling window, possibly with a certain overlapping rate, and performing a modelling of the grey levels of the image pixels contained within each of said windows by ways of a statistical parametric model.

3. Method according to claim 2, wherein the modelling parameters are the sum and/or the sum of the squares of the grey levels or luminances of the pixels within the considered sampling window, thereby defining a directional average and/or quadratic sum respectively, the direction being given by the orientation of the biggest common directional local edge.

4. Method according to any one of claims 2 and 3, wherein the different detection channels are clustered into groups, corresponding each to flaw types or categories which have the biggest common directional local edge which may be inscribed in the corresponding flaw types representative textures, the said biggest common directional local edge defining the two dimensions of the window used by the corresponding group of detection channels and the orientation of said sampling window being possibly adjustable according to the weft distortion.

5. Method according to claim 4, wherein the orientation of the sampling window is not adjustable, the modelling and/or reconstructing step(s) being performed by taking into account the weft distortion.

6. Method according to any one of claims 1 to 5, wherein each detection channel is composed of a local edge detector, which locates and weights the edge elements contained in the modelled and compressed digitized image and so provides a channel specific image of weighted edge elements, a flaw constructor, which sums and averages separately the components of the edge elements contained in a pre-defined window, and thresholding functions and/or tests of hypothesis means, which evaluate the parameters consisting of the averages of the pixels grey levels compared with a threshold, the difference of averages compared with a threshold and the variance of pixels grey levels compared with a threshold, and computed by the flaw constructor for each said pre-defined window.

7. Method according to claim 6, wherein the dimensions of the pre-defined window are preferably greater than or equal to the dimensions of the flaw type being searched or at least sufficient to be able to differentiate a flawed from a non-flawed zone, with a minimal level of certainty, by the considered detection channel, the shape and the orientation of said pre-defined window being also adapted to the concerned searched flaw type and to the corresponding noticed flaw orientation or weft distortion.

8. Method according to any one of claims 1 to 7, wherein the correction of the digitized image consists of a filtering operation by using for example a look-up-table in order to perform a histogram modification of the grey levels of the pixels of the said image and of an enhancing operation, by using for example a convolution mask.

9. Apparatus for detecting flaws on moving fabrics or the like, comprised of at least one lighting means arrangement (3; 79, 80, 81) for illuminating the moving fabric (1; 70) or the like, at least one image forming and recording means (2,4), a vision computer (8) receiving the image signal of the fabric or the like; said vision computer (8) comprising at least one acquisition module (9) and at least one processing module (14) for each image recording means (4); **characterized in that**

- each of said processing module(s) (14) is composed of at least one pre-processing and modelling unit (16a, 16b, 16n) followed, each, by several corresponding detection units (17a, 17b);

- each of said detection units (17) including several distinct detection channels (32-35) working contemporaneously, each of them being dedicated to one type or category of flaws to be detected; a plurality of local edge detectors (36-39) for splitting, for each channel, the said image signal into vectorial edge elements (36-39); and a plurality of corresponding flaw constructors (40-43) for reconstructing, for each channel, the flaw type, on the basis of the said edge elements;

- said vision computer (8) further comprising a central unit (20) controlling all the modules (9, 14) and being linked to display, storage, edition and/or driving peripherals (23, 24, 25, 26).

10. Apparatus according to claim 9, wherein several image forming and recording means provided, having adjacent or at least partly overlapping view fields, in order to cover the whole width of the fabric or the like, each image forming and recording means being comprised of a photographic lens (2) and a line scan camera (4), associated with an analog/digital converter (5) and a possibly corresponding transmitter module (6).

11. Apparatus according to any one of claims 9 and 10, wherein each acquisition module (9) comprises a receiver circuit (10), a look-up-table (11) to correct the image of the fabric or the like possibly biased by irregular illumination or light response differences at the image forming and recording means (2, 4), and a frame memory (12) to store the successive images before their flaw modelling and detection processing.

12. Apparatus according to any one of claims 9 to 11, wherein each processing and modelling unit (16a, 16b, 16n) consists of a cabled processor, a digital signal processor or any massively parallel device which processes the image coming from the associated acquisition module (9) in order to filter and eliminate the noisy information, possibly by using a look-up-table, and/or to enhance the image, possibly by using a convolution mask, samples the said image by means of, possibly overlapping, sampling windows, adapted to the type of flaw to be detected, and computes the average sum and/or the quadratic sum of the grey levels of the pixels within each of the said sampling windows in order to obtain a statistical parametric model of the image.

13. Apparatus according to any one of claims 9 to 12, wherein the detection units (17a, 17b) consist each of parallel arranged fast digital signal processors (18a, 18b, 18c; 18d, 18e) and their associated data and program memories (19), forming as many different detection channels as there are different types or categories of flaws to be searched, each of said signal processors (18a, 18b, 18c; 18d, 18e) performing i) a transformation of the modellised image issued by the corresponding pre-processing and modelling unit (16a, 16b, 16n) into an image composed of weighted edge elements marking the local texture of possible flaws, ii) a linkage of said edge elements within a validation window adapted to the flaw type to be detected by the said detection channel, by summing and averaging separately the weights of said edge elements and iii) an indication of presence of flaw(s) by using the distribution parameter of the obtained averages and by means of thresholding functions and/or tests of hypothesis.

14. Apparatus according to any one of claims 9 to 13, wherein the direction of the light emitted by the lighting means arrangement (3; 79, 80, 81) is oblique, with a weak angle, or almost horizontal, with reference to the fabric (70) or the like, the image forming and recording means (2, 4) being positioned along an almost vertical axis (74) with reference to the fabric (70) or the like.

15. Apparatus according to any of claims 9 to 14, wherein the lighting means arrangement is formed by several light projectors (79, 80, 81) disposed in two rows across the total fabric width, the projectors on each row having same distances between each other, one row displaced by half distance against the other row, the projectors of each row radiating towards the center of the stripe to be detected and so illuminating quasi-uniformly the whole fabric width, at least along a ribbon like transverse strip, by the combination of the oriented directional light beams (73) issued by each of the said light projectors (79, 80, 81), hereby creating a high intensity light band across the fabric or the like.

16. Apparatus according to any one of claims 9 to 15, wherein an encoder (7) measuring the displacement of the moving fabric (1; 70) or the like and a visualisation module (21) linked to a monitor (22) are also provided.

17. Apparatus according to any of claims 9 to 16, wherein a lighting means arrangement and a corresponding image forming and recording means are mounted on and directed towards each face or side of the moving fabric(1; 70) or the like.

**Patentansprüche**

1. Verfahren zum Detektieren von Defekten bei sich bewegenden textilen Flächengebilden, Kleidungsstücken, blattförmigen Materialen oder ähnlichem, welches die folgenden Schritte umfasst:

   - Ausbilden eines Bildes des textilen Flächengebildes oder dergleichen, und
   - Aufzeichnung des Bildes durch wenigstens eine Bildaufzeichnungseinrichtung (4),
   - Digitalisieren des resultierenden Videosignals,
   - Übertragen des digitalisierten Bildes nach einer Korrektur und spezifischen Darstellung zu einem Verarbeitungsmodul,

   dadurch gekennzeichnet, dass

   - das Signal von jeder Bildaufzeichnungseinrichtung zu einem entsprechenden Verarbeitungsmodul übertragen wird, wobei jedes der Module mehrere unterschiedliche Detektionskanäle (32-35) aufweist, die gleichzeitig arbeiten, von denen jedes einem Typ oder Kategorie von Defekten, die zu detektieren sind, zugeordnet ist;
   - Aufsplitten des dargestellten Bildes in vektormäßige Randelemente (36-39) für jeden Kanal, die repräsentativ für das örtlich in Betracht gezogene Defektgewebe sind;
   - Rekonstruieren des Defekttyps, nach dem gesucht wird (40-43) für jeden Kanal auf der Grundlage der genannten Randelemente und unter Verwendung angepasster Fenster, wobei Wichtungskomponenten $V_j$ von all den Randelementen, die in jedem der Fenster enthalten sind, bewertet werden, und
   - Anzeigen des Vorhandenseins, des Typs und/oder der Position der möglicherweise detektierten Defekte.

**2.** Verfahren nach Anspruch 1,
wobei der Schritt der Darstellung des digitalisierten Bildes, der zu einer Bildkompression führt, aus einer Abtastung des digitalisierten Bildes mit Hilfe eines angepassten Abtastfensters, möglicherweise mit einer bestimmten Überlappungsrate besteht und aus der Durchführung einer Darstellung von Grauwerten von Bildpunkten, die innerhalb jedes der Fenster enthalten sind, mit Hilfe eines statistischen Parametermodells besteht.

**3.** Verfahren nach Anspruch 2,
wobei die Parameter der Darstellung aus der Summe und/oder der Summe der Quadrate der Grauwerte oder der Luminanz der Bildpunkte innerhalb des betrachteten Abtastfensters bestehen, wodurch jeweils eine direktionale Mittelwert- und/oder Quadratsumme definiert wird, wobei die Richtung durch die Orientierung des größten gemeinsamen direktionalen örtlichen Randes bzw. Kante gegeben ist.

**4.** Verfahren nach einem der Ansprüche 2 und 3,
wobei die unterschiedlichen Detektionskanäle in Gruppen aufgeteilt sind, die jedem der Defekttypen oder Kategorien entsprechen, welche den größten gemeinsamen direktionalen örtlichen Rand besitzen und die in die jeweiligen, den Defekttyp repräsentierenden Strukturen eingeschrieben werden können, wobei der größte gemeinsame direktionale örtliche Rand die zwei Dimensionen des Fensters definiert, welches durch die entsprechende Gruppe der Detektionskanäle verwendet wird, und wobei die Orientierung des Samplingfensters als Möglichkeit gemäß der Schußverschiebung bzw. -verzerrung einstellbar ist.

**5.** Verfahren nach Anspruch 4,
bei dem die Orientierung des Abtastfensters nicht einstellbar ist, wobei der(die) Schritt(e) der Darstellung und/ oder Rekonstruktionsschritt bzw. -schritte dadurch ausgeführt wird bzw. werden, indem die Schußverschiebung bzw. -verzerrung mit einkalkuliert wird.

**6.** Verfahren nach einem der Ansprüche 1 bis 5,
wobei jeder Detektionskanal folgendes umfaßt:

- aus einem örtlichen Rand- bzw. Kantendetektor besteht, der die Rand- bzw. Kantenelemente, die in dem dargestellten und komprimierten und digitalisierten Bild enthalten sind, lokalisiert und wichtet und auf diese Weise ein kanalspezifisches Bild der gewichteten Randelemente erzeugt,
- aus einer Defekt-Konstruktionseinheit, die in getrennter Weise die Komponenten der Randelemente, die in einem vordefinierten Fenster enthalten sind, aufsummiert und mittelt, und
- aus Schwellenwertfunktions- und/oder Hypothesentesteinrichtungen, welche die Parameter bewerten, die aus folgendem bestehen:

  - den Mittelwerten der Bildpunkt-Grauwerte verglichen mit einem Schwellenwert,
  - der Differenz der Mittelwerte verglichen mit einem Schwellenwert, und
  - der Variation der Bildpunkt-Grauwerte verglichen mit einem Schwellenwert, und
  - die durch die Defekt-Konstruktionseinheit für jedes vordefinierte Fenster berechnet werden.

**7.** Verfahren nach Anspruch 6,
wobei die Abmessungen des vordefinierten Fensters in bevorzugter Weise größer sind als oder gleich sind mit den Abmessungen des Defekttyps, nach dem gesucht wird, oder wenigstens ausreichend bemessen sind, um die Möglichkeit zu bieten, zwischen einer defekten und einer nicht defekten Zone differenzieren zu können, und zwar bei einem minimalen Sicherheitswert, vermittels oder durch den in Betracht stehenden Detektionskanal, wobei die Gestalt und die Orientierung des vordefinierten Fensters auch an den in Betracht stehenden gesuchten Defekttyp und die entsprechende wahrgenommene Defektorientierung oder Schußverzerrung oder -verschiebung angepasst sind.

**8.** Verfahren nach einem der Ansprüche 1 bis 7,
wobei die Korrektur des digitalisierten Bildes aus einer Filteroperation besteht, unter Verwendung von beispielsweise einer Nachschlagetabelle, um eine Histogramm-Modifikation der Grauwerte der Bildpunkte des Bildes und einer Verstärkungsoperation unter Verwendung von beispielsweise einer Faltungsmaske durchzuführen.

**9.** Vorrichtung zum Detektieren von Defekten an in Bewegung befindlichen textilen Flächengebilden oder ähnlichem, bestehend aus wenigstens einer Beleuchtungseinrichtungsanordnung (3; 79, 80, 81) zum Beleuchten des in Bewegung befindlichen textilen Flächengebildes (1; 70) oder ähnlichem, wenigstens einer Bilderzeugungs und Auf-

EP 0 742 431 B1

zeichnungseinrichtung (2, 4), einem Bildcomputer (8), der das Bildsignal des textilen Flächengebildes oder dergleichen empfängt; wobei der Bildcomputer (8) wenigstens ein Datenerfassungsmodul (9) und wenigstens ein Verarbeitungsmodul (14) für jede Bildaufzeichnungseinrichtung (4) umfasst;
dadurch gekennzeichnet, dass

- das oder jedes Verarbeitungsmodul (14) aus wenigstens einer Vorverarbeitungs- und Darstellungseinheit (16a, 16b,16n), jeweils gefolgt durch mehrere entsprechende Detektionseinheiten (17a, 17b) zusammengesetzt ist;
- jede der Detektionseinheiten (17) mehrere unterschiedliche Detektionskanäle (32-35) enthält, die gleichzeitig arbeiten, wobei jeder der Kanäle einem Typ oder einer Kategorie von Defekten, die zu detektieren sind, zugeordnet ist; eine Vielzahl von örtlichen Randdetektoren (36-39) enthält, um in Verbindung mit jedem Kanal das Bildsignal in vektorielle Rand- bzw. Kantenelemente (36-39) aufzusplitten; und eine Vielzahl von entsprechenden Defektkonstruktionseinheiten (40-43) enthält, um für jeden Kanal den Defekttyp auf der Grundlage der Rand- bzw. Kantenelemente zu rekonstruieren;
- wobei der Bildcomputer (8) ferner eine Zentraleinheit (20) aufweist, die alle Module (9, 14) steuert und an Anzeige-, Speicher-, Editier-und/oder Steuerperipheriegeräte (23, 24, 25, 26) angebunden ist.

10. Vorrichtung nach Anspruch 9,
wobei mehrere vorgesehene Bilderzeugungs- und Aufzeichnungseinrichtungen benachbarte oder wenigstens sich teilweise überlappende Betrachtungsfelder besitzen, um die gesamte Weite des textilen Flächengebildes oder dergleichen abzudecken, wobei jede Bilderzeugungs- und Aufzeichnungseinrichtung aus einer fotografischen Linse (2) und einer Zeilenabtastkamera (4) besteht, der ein Analog-/Digital-Umsetzer (5) und ein möglicherweise entsprechendes Sendermodul (6) zugeordnet sind.

11. Vorrichtung nach einem der Ansprüche 9 und 10,
wobei jedes Erfassungsmodul (9) eine Empfängerschaltung (10), eine Nachschlagetabelle (11) zum Korrigieren des Bildes des textilen Flächengebildes oder dergleichen umfasst, welches möglicherweise durch ungleichmäßige Beleuchtung oder Lichtansprechunterschiede bei der Bilderzeugungs- und Aufzeichnungseinrichtung (2, 4) vorbelastet ist, und einen Bildspeicher (12) umfasst, um die aufeinander folgenden Bilder vor deren Defekt-Modellierung und Detektionsverarbeitung zu speichern.

12. Vorrichtung nach einem der Ansprüche 9 bis 11,
wobei jede Verarbeitungs- und Darstellungseinheit (16a, 16b, 16n) aus einem verkabelten Prozessor, einem digitalen Signalprozessor oder irgendeiner soliden parallelen Vorrichtung besteht, welche das von dem zugeordneten Erfassungsmodul (9) kommende Bild verarbeitet, um Rauschsignalinformationen herauszufiltern und zu beseitigen, möglicherweise unter Verwendung einer Nachschlagetabelle, und/oder um das Bild zu verstärken, möglicherweise unter Verwendung einer Faltungsmaske, und welche das Bild mittels sich möglicherweise überlappender Abtastfenster abtastet, und zwar angepasst an den Defekttyp, der zu detektieren ist und welche eine Mittelwertsumme und/oder die Quadratsumme der Grauwerte der Bildpunkte innerhalb jedes der Abtastfenster berechnet, um ein statistisches parametrisches Modell des Bildes zu erhalten.

13. Vorrichtung nach einem der Ansprüche 9 bis 12,
wobei die Detektionseinheiten (17a, 17b) jeweils aus parallel angeordneten schnellen digitalen Signalprozessoren (18a, 18b, 18c; 18d, 18e) und deren zugeordneten Daten- und Programmspeichern (19) bestehen, die so viele unterschiedliche Detektionskanäle bilden wie unterschiedliche Typen oder Kategorien von Defekten, die gesucht werden, vorhanden sind, wobei jeder der Signalprozessoren (18a, 18b, 18c; 18d, 18e) folgendes durchführt:

i) eine Transformation des modellierten Bildes, welches durch die entsprechende Vorverarbeitungsund Darstellungseinheit (16a, 16b, 16n) ausgegeben wird, in ein Bild, welches aus gewichteten Randelementen zusammengesetzt ist, die das örtliche Gewebe von möglichen Defekten markieren,
ii) eine Verkettung der Rand- bzw. Kantenelemente innerhalb eines Gültigkeitsfensters, welches an den Defekttyp angepasst ist, der detektiert wird, durch das Detektionssignal, mittels Aufsummierung und Mittelwertbildung der Wichtungen der Rand-bzw. Kantenelemente in getrennter Weise und
iii) eine Anzeige über das Vorhandensein eines Defektes bzw. von Defekten, unter Verwendung des Verteilungsparameters der erhaltenen Mittelwerte und vermittels der Schwellenwertfunktionen und/oder Hypothesetests.

14. Vorrichtung nach einem der Ansprüche 9 bis 13, wobei die Richtung des durch die Beleuchtungseinrichtungsan-

13

ordnung (3; 79, 80, 81) emittierten Lichtes schräg verläuft, und zwar in einem schwachen Winkel, oder nahezu horizontal, in Bezug auf das textile Flächengebilde (70) oder dergleichen, wobei die Bilderzeugungs- und Aufzeichnungseinrichtungen (2, 4) entlang einer nahezu vertikalen Achse (74) in Bezug auf das textile Flächengebilde (70) oder dergleichen positioniert sind.

15. Vorrichtung nach einem der Ansprüche 9 bis 14,
    wobei die Beleuchtungseinrichtungsanordnung durch mehrere Lichtprojektoren (79, 80, 81) gebildet ist, die in zwei Reihen über die gesamte textile Flächengebildebreite angeordnet sind, wobei die Projektoren einer jeden Reihe gleiche Abstände zueinander haben, wobei eine Reihe um den halben Abstand gegenüber der anderen Reihe versetzt ist und wobei die Projektoren von jeder Reihe zum Zentrum des Streifens, der detektiert wird, hin strahlen und dadurch quasi einheitlich die gesamte textile Flächengebildebreite beleuchten, und zwar wenigstens entlang einem bandförmigen quer verlaufenden Streifen, mittels der Kombination der richtungsorientierten Lichtstrahlen (73), die von jedem der Lichtprojektoren (79, 80, 81) ausgegeben werden, wodurch ein hochintensives Lichtband quer über das textile Flächengebilde oder dergleichen erzeugt wird.

16. Vorrichtung nach einem der Ansprüche 9 bis 15,
    wobei ein Kodierer (7) die Verschiebung oder Versetzung des in Bewegung befindlichen textilen Flächengebildes (1; 70) oder dergleichen misst und wobei auch ein Sichtbarmachungsmodul (21), das mit einem Monitor (22) verbunden ist, vorgesehen ist.

17. Vorrichtung nach einem der Ansprüche 9 bis 16,
    wobei eine Beleuchtungseinrichtungsanordnung und eine entsprechende Bilderzeugungs- und Aufzeichnungseinrichtung an jeder Seite oder Fläche des in Bewegung befindlichen textilen Flächengebildes (1; 70) oder dergleichen montiert ist und auf jede Fläche oder Seite desselben gerichtet ist.


**Revendications**

1. Procédé pour détecter des défauts sur des tissus, des vêtements, des matériaux en feuille ou l'analogue en mouvement, comprenant les étapes suivantes : former une image du tissu ou l'analogue et enregistrer ladite image par au moins un moyen d'enregistrement d'images (4), numériser le signal vidéo résultant, transmettre l'image numérisée, après correction et modélisation spécifiques, à un module de traitement ; caractérisé en ce que :

   - le signal en provenance de chaque moyen d'enregistrement d'images est transmis à un module de traitement correspondant ; chacun desdits modules comprenant plusieurs canaux de détection distincts (32-35) travaillant simultanément, chacun d'eux étant spécialisé pour un type ou une catégorie de défauts à détecter ;
   - pour chaque canal, ladite image modélisée est fractionnée en éléments de bords vectoriels (36-39) représentatifs de la texture locale du défaut concerné ;
   - pour chaque canal, on reconstruit le type de défaut recherché (40-43) sur la base desdits éléments de bords et en utilisant des fenêtres adaptées, et on évalue les composantes de poids, Vj, de tous les éléments de bords contenus dans chacune desdites fenêtres, et
   - on indique la présence, le type et/ou la position des défauts éventuellement détectés.

2. Procédé selon la revendication 1, dans lequel l'étape de modélisation de l'image numérisée, conduisant à une compression d'image, consiste en l'échantillonnage de l'image numérisée au moyen d'une fenêtre d'échantillonnage adaptée, éventuellement avec un certain taux de recouvrement, et en une modélisation des niveaux de gris des pixels d'images contenus à l'intérieur de chacune desdites fenêtres au moyen d'un modèle paramétrique statistique.

3. Procédé selon la revendication 2, dans lequel les paramètres de modélisation sont la somme et/ou la somme des carrés des niveaux de gris ou luminances des pixels à l'intérieur de la fenêtre d'échantillonnage considérée, définissant ainsi une somme moyennes et/ou une somme quadratique directionnelle respectivement, la direction étant donnée par l'orientation du plus grand bord local directionnel commun.

4. Procédé selon l'une quelconque des revendications 2 et 3, dans lequel les différents canaux de détection sont rassemblés en groupes, correspondant chacun à des types ou des catégories de défauts qui ont le plus grand bord local directionnel commun pouvant être inscrit dans les textures représentatives des types de défauts correspondants, ledit plus grand bord local directionnel commun définissant les deux dimensions de la fenêtre utilisée par le groupe correspondant de canaux de détection et l'orientation de ladite fenêtre d'échantillonnage pouvant être ajustée en fonction de la déformation de trame.

5. Procédé selon la revendication 4, dans lequel l'orientation de la fenêtre d'échantillonnage n'est pas réglable, la (les) étape(s) de modélisation et/ou de reconstruction étant effectuée(s) en prenant en compte la déformation de trame.

6. Procédé selon l'une quelconque des revendications 1 à 5, dans lequel chaque canal de détection comprend un détecteur de bords locaux, qui positionne et pondère les éléments de bords contenus dans l'image numérisée modélisée et comprimée et procure ainsi une image spécifique d'un canal d'éléments de bords pondérés, un constructeur de défauts qui totalise et moyenne séparément les composantes des éléments de bords contenus dans une fenêtre prédéfinie, et des fonctions de seuillage et/ou des moyens de tests d'hypothèses, qui évaluent les paramètres constitués par les moyennes des niveaux de gris des pixels comparées à un seuil, la différence des moyennes comparée à un seuil et la variance des niveaux de gris des pixels comparée à un seuil, et calculée par le constructeur de défauts pour chacune desdites fenêtres préalablement définies.

7. Proc'lequel les dimensions de la fenêtre prédéfinie sont de préférence supérieures ou égales aux dimensions du type de défaut recherché ou tout au moins suffisantes pour pouvoir différencier une zone à défauts d'une zone sans défaut, avec un niveau de certitude minimal, par le canal de détection considéré, la forme et l'orientation de ladite fenêtre prédéfinie étant également adaptées au type de défaut recherché concerné et à l'orientation du défaut remarqué correspondant ou à la déformation de trame.

8. Procédé selon l'une quelconque des revendications 1 à 7, dans lequel la correction de l'image numérisée consiste en une opération de filtrage en utilisant par exemple une table de consultation afin d'effectuer une modification d'histogramme des niveaux de gris des pixels de ladite image et une opération de renforcement, en utilisant par exemple un masque de convolution.

9. Dispositif pour détecter des défauts sur des tissus ou l'analogue en mouvement, comprenant au moins une disposition de moyens d'éclairage (3 ; 79, 80, 81) pour éclairer le tissu ou l'analogue en mouvement (1 ; 70), au moins un moyen de formation et d'enregistrement d'images (2, 4), un ordinateur de vision (8) recevant le signal d'image du tissu ou l'analogue ; ledit ordinateur de vision (8) comprenant au moins un module d'acquisition (9) et au moins un module de traitement (14) pour chaque moyen d'enregistrement d'image (4) ; caractérisé en ce que :

- chacun desdits modules de traitement (14) comprend au moins une unité de prétraitement et de modélisation (16a, 16b, 16n) suivie chacune par plusieurs unités de détection correspondantes (17a, 17b) ;
- chacune desdites unités de détection (17) comprend plusieurs canaux de détection distincts (32-35) travaillant simultanément, chacun d'eux étant spécialisé pour un type ou une catégorie de défaut à détecter, une multiplicité de détecteurs de bords locaux (36-39) pour fractionner, pour chaque canal, ledit signal d'image en des éléments de bords vectoriels (36-39) ; et une multiplicité de constructeurs de défauts correspondants (40-43) pour reconstruire pour chaque canal le type de défaut sur la base desdits éléments de bord ;
- ledit ordinateur de vision (8) comprend en outre une unité centrale (20) commandant tous les modules (9, 14) et reliée à des périphériques de visualisation, de stockage, d'édition et/ou de pilotage (23, 24, 25, 26).

10. Dispositif selon la revendication 9, dans lequel plusieurs moyens de formation et d'enregistrement d'image sont prévus, ayant des champs de vue adjacents ou tout au moins se recouvrant partiellement, afin de couvrir la totalité de la largeur du tissu ou de l'analogue, chaque moyen de formation et d'enregistrement d'images comprenant un objectif photographique (2) et une caméra à balayage de lignes (4) associés à un convertisseur analogique/numérique (5) et à un module transmetteur éventuellement correspondant (6).

11. Dispositif selon l'une quelconque des revendications 9 et 10, dans lequel chaque module d'acquisition (9) comprend un circuit récepteur (10), une table de consultation (11) pour corriger l'image du tissu ou de l'analogue éventuellement altérée par un éclairage irrégulier ou des différences de réponse de lumière au niveau des moyens de formation et d'enregistrement d'images (2, 4), et une mémoire d'images (12) pour stocker les images successives avant leur traitement de modélisation et de détection de défauts.

12. Dispositif selon l'une quelconque des revendications 9 à 11, dans lequel chaque unité de traitement et de modélisation (16a, 16b) comprend un processeur câblé, un processeur de signaux numériques ou un dispositif massivement parallèle qui traite l'image en provenance du module d'acquisition associé (9) afin de filtrer et éliminer l'information de bruit, éventuellement en utilisant une table de consultation, et/ou afin de renforcer l'image, éventuellement en utilisant un masque de convolution, échantillonne ladite image au moyen de fenêtres d'échantillonnage, éventuellement se recouvrant, adaptées au type de défaut à détecter, et calcule la somme des moyennes et/ou la somme quadratique des niveaux de gris des pixels à l'intérieur de chacune desdites fenêtres d'échantillonnage afin d'obtenir un modèle paramétrique statistique de l'image.

13. Dispositif selon l'une quelconque des revendications 9 à 12, dans lequel les unités de détection (17a, 17b) comprennent chacune des processeurs de signaux numériques rapides disposés en parallèle (18a, 18b, 18c ; 18d, 18e) et leurs mémoires associées de données et de programmes (19), formant autant de canaux de détection différents qu'il y a de catégories ou de types différents de défauts à rechercher, chacun desdits processeurs de signaux (18a, 18b, 18c ; 18d, 18e) effectuant :

    i) une transformation de l'image modélisée provenant de l'unité de prétraitement et de modélisation correspondante (16a, 16b, 16n) en une image composée d'éléments de bords pondérés marquant la texture locale des défauts possibles,

    ii) une liaison desdits éléments de bords à l'intérieur d'une fenêtre de validation adaptée au type de défaut à détecter par ledit canal de détection, en totalisant et en moyennant séparément les poids desdits éléments de bords, et

    iii) une indication de la présence de défaut(s) en utilisant le paramètre de distribution des moyennes obtenues et au moyen des fonctions de seuillage et/ou de tests d'hypothèses.

14. Dispositif selon l'une quelconque des revendications 9 à 13, dans lequel la direction de la lumière émise par les moyens d'éclairage (3 ; 79, 80, 81) est oblique, avec un angle faible, ou presque horizontale par rapport au tissu (70) ou l'analogue, les moyens de formation et d'enregistrement d'image (2, 4) étant positionnés selon un axe presque vertical (74) par rapport au tissu (70) ou l'analogue.

15. Dispositif selon l'une quelconque des revendications 9 à 14, dans lequel la disposition des moyens d'éclairage est formée par plusieurs projecteurs de lumière (79, 80, 81) disposés en deux rangées en travers de la largeur totale du tissu, les distances entre les projecteurs sur chaque rangée étant égales, une rangée étant décalée d'une demi-distance par rapport à l'autre rangée, les projecteurs de chaque rangée rayonnant vers le centre de la bande à détecter et éclairant ainsi quasi uniformément la totalité de la largeur du tissu, au moins le long d'une bande transversale analogue à un ruban, par la combinaison des faisceaux lumineux directionnels orientés (73) provenant de chacun desdits projecteurs de lumière (79, 80, 81), créant ainsi une bande lumineuse de forte intensité en travers du tissu ou l'analogue.

16. Dispositif selon l'une quelconque des revendications 9 à 15, dans lequel un codeur (7) mesurant le déplacement du tissu en mouvement (1 ; 70) ou l'analogue et un module de visualisation (21) relié à un moniteur (22) sont également prévus.

17. Dispositif selon l'une quelconque des revendications 9 à 16, dans lequel une disposition de moyens d'éclairage et des moyens de formation et d'enregistrement d'images correspondants sont montés sur chaque face ou côté du tissu en mouvement (1 ; 70) ou l'analogue ou sont dirigés vers chaque face.

FIG.1

FIG.2

FIG.3

INPUT IMAGE — 45

16a

30
HISTOGRAM MODIFICATION — 46
CONVOLUTION MASK — 47

31
SAMPLING WINDOWING AVERAGE — 48
SAMPLING WINDOWING QUADRATIC SUM — 49

36
EDGE ELEMENT AVERAGE — 50
EDGE ELEMENT VARIANCE — 51
DIFFERENCIATOR — 52

40
VALIDATION WINDOWING AVERAGE OF DIF. — 59
VALIDATION WINDOWING AVERAGE OF VARIANCE — 54

COMPUTE DISTRIBUTION — 55
THRESHOLDING — 56
TEST OF HYPOTHESIS — 57
COMPUTE DISTRIBUTION — 58

DECISION — 59

## FIG.4

FIG.5

FIG.6